Europäisches Patentamt

European Patent Office

Office européen des brevets

(11) Veröffentlichungsnummer: **0 081 676**
A1

(12) **EUROPÄISCHE PATENTANMELDUNG**

(21) Anmeldenummer: 82110323.1

(22) Anmeldetag: 09.11.82

(51) Int. Cl.³: **H 02 K 17/42, H 02 K 1/22, H 02 K 1/02**

(30) Priorität: 20.11.81 AT 5014/81
26.11.81 AT 5085/81

(43) Veröffentlichungstag der Anmeldung: 22.06.83
Patentblatt 83/25

(84) Benannte Vertragsstaaten: AT BE CH DE FR GB IT LI NL SE

(71) Anmelder: SIEMENS AKTIENGESELLSCHAFT, Berlin und München Wittelsbacherplatz 2, D-8000 München 2 (DE)

(72) Erfinder: Die Erfinder haben auf ihre Nennung verzichtet

(54) Asynchrongenerator mit am Läufer angeordneten Dauermagneten.

(57) Die Erfindung betrifft einen Asynchrongenerator mit am Läufer (1) angeordneten Dauermagneten (2, 2'). Die bisherigen Lösungen für die Selbsterregung solcher Generatoren scheiterten über längere Zeit meist an der Ausführung und Koerzitivkraft der Dauermagnete sowie deren Anordnung im Generator. Die Lösung dieser Probleme erfolgt durch Anordnung von modernen Dauermagneten (2, 2') direkt am Mantel des Läufers (1), wobei zwischen den Dauermagneten (2, 2') mindestens eine Nut (3) zur Feldführung eingefräst ist.

SIEMENS AKTIENGESELLSCHAFT    Unser Zeichen

Berlin und München            VPA 81 P 9626 E

0081676

Asynchrongenerator mit am Läufer angeordneten Dauermagneten

Die Erfindung betrifft einen Asynchrongenerator mit am Läufer angeordneten Dauermagneten. Seit langem ist bekannt, daß ein Asynchronmotor zu einem Asynchrongenerator wird, wenn zu den Wicklungen parallel Kondensatoren geschaltet werden. Diese Kondensatoren bilden einen Schwingkreis. Wird der Motor über die Synchrondrehzahl hinaus gedreht, so erregt sich der Kreis, wobei der Schwingstrom die Magnetisierung bewirkt. Damit Erregung eintritt, ist das Vorhandensein einer Remanenz im Läufer notwendig. Nachteile: Wird der Generator kurzgeschlossen, so entregt er sich und die Remanenz wird zerstört. Eine weitere Erregung ist nicht mehr möglich. Die Remanenz wird auch dann zerstört, wenn der Generator sehr schnell hochgedreht wird. Abhilfe hat man geschaffen, daß man im diesem Fall durch den Stator einen Gleichstromstoß von einem Akkumulator schickt oder den Generator kurzzeitig als Motor laufen läßt. Eine absolute Sicherheit, daß sich der Generator erregt, ist auch bei diesen Maßnahmen nicht gegeben.

Eine wesentliche Verbesserung wurde in der österreichischen Patentschrift Nr. 180 329 (Kubik) beschrieben. Es werden Dauermagnete in geeigneter Weise links und rechts vom Rotor montiert und durch magnetische Leitstücke wird das Feld in Luftspaltnähe gebracht. Damit ist eine Art Dauerremanenz gegeben. Auf Grund der damaligen Dauermagnete und ihrer verhältnismäßig kleinen Koerzitivkraft war dies auch keine Lösung auf lange Zeit, weil durch die großen Felder während des Generatorbetriebes diese Magnete

Ju 2 Bih / 13.10.1982

stark in Mitleidenschaft gezogen wurden. Die Läufer von älteren Maschinen waren aus gestanzten Dynamoblech hergestellt, die große Nuten trugen, in denen die Wicklung nachträglich eingelegt und links und rechts des Läufers mit einem Ring kurzgeschlossen wurde.

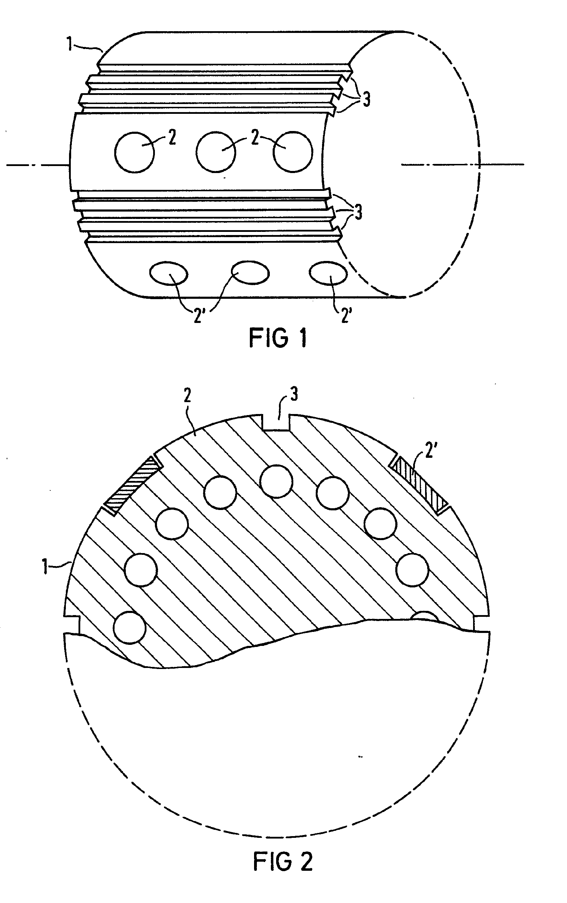

Die heutige Technologie bei der Herstellung eines Rotors ist die, daß ebenfalls gestanzte Bleche mit kreisrunden Ausnehmungen nahe des Umfanges gemäß Fig. 1 so aufeinandergelegt werden, daß zylindrische Hohlräume entstehen. In einer Spritzvorrichtung werden in einem einzigen Arbeitsgang sowohl die zylindrischen Hohlräume mit Aluminium gefüllt, als auch die Kurzschlußringe hergestellt. Auch ist es bereits möglich geworden, magnetische Werkstoffe einer extrem hohen Koerzitivkraft herzustellen.

Die Erfindung hat sich die Aufgabe gestellt, diesen neuen Stand der Technik in einer der ursprünglichen Aufgabenstellungen entsprechenden, jedoch in ihrer Durchführung wesensverschiedenen Art Rechnung zu tragen und einen Asynchrongenerator zu entwickeln, welcher die Vorteile größter Einfachheit und damit Kostenersparnis bei optimalen Wirkungsgrad, als auch absolute Synchronisationssicherheit bei niedersten Drehzahlen ergibt.

Die Erfindung besteht darin, daß in der Mantelfläche des Läufers Dauermagnete mit zum Läufer radialer und in Umfangsrichtung des Läufers aufeinanderfolgend gegensinniger Magnetisierungsrichtung eingefügt sind und daß zwischen jeweils zwei Dauermagneten mindestens eine Nut vorgesehen ist.

Vorteilhaft werden schmale Nuten mit geringer Tiefe parallel oder schräg zur Läuferachse scharfkantig mit rechteckförmigem Querschnitt in den Mantel des Läufers von einer zur anderen Stirnfläche eingefräst. Als günstige Dauermagnete haben sich Lathanid-Nickel-Magnete bzw. Kobalt-Platin-Magnete welche eine hohe Koerzitivkraft besitzen, herausgestellt.

Nach einer vorteilhaften Ausführungsform der Erfindung entspricht die Umfangsverteilung und Polung der Läufermagnete der Polteilung des Generators und es ist pro Generatorpol mindestens ein zugeordneter Läufermagnet mit mindestens einer Nut vorgesehen.

Die Wirkungsweise der Erfindung geht unmittelbar aus Fig. 1 hervor. Der Läufer 1 ist an seiner Mantelfläche mit in Ausnehmungen fixierten Magnetplättchen 2, 2' bestückt. Wären keine Nuten vorhanden, so würde sich das Feld weitgehend im Rotor selbst schließen. Die Wirkungsweise der Nuten geht aus Fig. 2 hervor. Der Kraftlinienweg des Magnetfeldes erfährt durch die in der Mantelfläche eingefrästen Nuten 3 eine Unterbrechung, so daß die Feldlinien zufolge der geringen Permeabilität der eisenfreien Räume 3 aus dem Läufer austreten und damit die Ständerwicklung im Sinne einer die Selbsterregung förderlichen Induktion durchsetzen können.

Wie die Praxis zeigt, ist durch die erfindungsgemäße Lösung vor allem bei Anlagen mit stark wechselnden Umdrehungsgeschwindigkeiten, beispielsweise bei Windkraftanlagen, eine sichere Selbsterregung auch bei zeitweisen Stillstand zu erreichen oder umgekehrt beim plötzlichen Auftreten von Sturmböen durch Zuschalten von Kondensatoren auch in diesem Falle die Umdrehungsgeschwindigkeit innerhalb der durch die Resonanzbedingungen des Systems gegebenen Bereiche zu halten. Windkanalversuche haben ergeben, daß ein erfindungsgemäß ausgeführter Windkonverter auch bei 150 km-Sturm praktisch seine Drehzahl nicht verändert oder gar außer Tritt kommt. Die erfindungsgemäße Lösung erlaubt daher Windturbinen zu bauen, die kein Getriebe mehr haben, weil Synchronisation auch bei geringen Umdrehungen eintritt und keine Verstellpropeller mehr besitzen, weil durch Zuschaltung von genügend großen Kondensatoren eine geringe Umdrehungszahl bei einwandfreier Synchronisation erzwungen werden kann.

Die bei den Abbrems- oder Anlaufvorgängen auftretenden Ausgleichströme bzw. -felder sind nicht in der Lage, die verwendeteten, für die Erfindung wesentlichen Magnetwerkstoffe zu entmagnetisieren, da deren Magnetisierungsschleife in jedem Falle für die erforderliche Remanenzmagnetisierung des Läufers und damit für das Hochlaufen des Selbsterregung sorgen.

Um eine weitere Beschleunigung der Erregung und die wesentliche Anpassung des Feldes der Magnete an die Feldform der Maschine zu erreichen, sind die Läufermagnete 2, 2' so anzuordnen, daß ihre Umfangsverteilung und Polung der Polteilung des Generators entspricht, wobei ggf. pro Generatorpol mehrere Läufermagnete 2, 2' vorgesehen sein können.

Der Vollständigkeit halber muß erwähnt werden, daß ein Läufer, erfindungsgemäß nur mit Magneten bestückt, sich nur teilweise synchronisieren läßt, ein Läufer nur mit Nuten versehen, sich fast nicht synchroniseren läßt. Wird die Maschine kurzgeschlossen, so entregt sie sich selbstverständlich, wird aber der Kurzschluß behoben, tritt unmittelbar darauf in wenigen Sekunden Synchronisation ein.

Patentansprüche

1. Asynchrongenerator mit am Läufer angeordneten Dauermagneten, d a d u r c h   g e k e n n z e i c h n e t , daß in der Mantelfläche des Läufers (1) Dauermagnete (2, 2') mit zum Läufer (1) radialer und in Umfangsrichtung des Läufers aufeinanderfolgend gegensinniger Magnetisierungsrichtung eingefügt sind und daß zwischen jeweils zwei Dauermagneten (2, 2') mindestens eine Nut (3) vorgesehen ist.

2. Asynchrongenerator nach Anspruch 1, d a d u r c h   g e k e n n z e i c h n e t , daß die Umfangsverteilung und Polung der Dauermagnete (2, 2') der Polteilung des Generators entspricht und daß pro Generatorpol mindestens ein Dauermagnet (2, 2') vorgesehen ist.

3. Asynchrongenerator nach Anspruch 1, d a d u r c h   g e k e n n z e i c h n e t , daß die Nut (3) parallel zur Läuferachse gerichtet ist.

4. Asynchrongenerator nach Anspruch 1, d a d u r c h   g e k e n n z e i c h n e t , daß die Nut (3) schräg zur Läuferachse gerichtet ist.

5. Asynchrongenerator nach Anspruch 1, 3 oder 4, d a d u r c h   g e k e n n z e i c h n e t , daß die Nut (3) von einer Stirnfläche bis zur anderen Stirnfläche des Läufers reicht.

6. Asynchrongenerator nach Anspruch 1, d a d u r c h   g e k e n n z e i c h n e t , daß der Querschnitt der Nut (3) rechteckförmig ist.

7. Asynchrongenerator nach Anspruch 1 und 2,     d a –
d u r c h     g e k e n n z e i c h n e t ,     daß als
Dauermagnete (2, 2') Lathanid-Nickel-Magnete vorgesehen
sind.

8. Asynchrongenerator nach Anspruch 1 und 2,     d a –
d u r c h     g e k e n n z e i c h n e t ,     daß als
Dauermagnete (2, 2') Kobalt-Platin-Magnete vorgesehen
sind.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 731 125 (A. NIKAIDO et al.) <br> * Spalte 2, Zeilen 34-42; Figur 1 * | 1-3,5,6 | H 02 K 17/42 <br> H 02 K 1/22 <br> H 02 K 1/02 |
| D,Y | --- <br> AT-B- 180 329 (F. KUBIK) <br> * Gesamte Schrift * | 1-3,5 | |
| Y | --- <br> DE-C-1 046 405 (SCINTILLA) <br> * Spalte 3, Zeilen 1-9 * | 1-3,5 | |
| A | --- <br> US-A-2 643 350 (F.W. MERRILL) <br> * Spalte 3, Zeilen 6-16 * | | |
| | ----- | | **RECHERCHIERTE SACHGEBIETE (Int. Cl. ³)** <br><br> H 02 K 1/00 <br> H 02 K 17/00 <br> H 02 K 21/00 |

Der vorliegende Recherchenbericht wurde für alle Patentansprüche erstellt.

| Recherchenort <br> BERLIN | Abschlußdatum der Recherche <br> 08-02-1983 | Prüfer <br> GESSNER E A F |
|---|---|---|